# EUROPEAN PATENT APPLICATION

(11) **EP 0 623 840 A1**
(43) Date of publication of application: **09.11.1994**
(21) Application number: 94201167.7
(22) Date of filing: 29.04.1994
(51) Int. Cl.: G03B 27/32

(54) **A hybrid colourphotography printing system**

(30) Priority: 07.05.1993 IT PN930031
(71) Applicant: SAN MARCO IMAGING s.r.l., I-33080 Fiume Veneto (Pordenone) (IT)
(72) Inventor: Degani, Franca, Reana Del Roiale (Udine) (IT); Piccinin, Massimo, San Vendemmiano (Treviso) (IT); Scodellaro, Eni, Spilimbergo (Pordenone) (IT)
(74) Representative: Da Riva, Ermanno

(57) **Abstract**

The hybrid colour photography printing system utilizes a photographic printing machine of the type comprising an optical projection system (GO) and an electronic reproduction system (GE) installed together in a single unit, designed to generate respective images (FO, FE) for transfer to a sheet of light-sensitive paper (7); following exposure, the light-sensitive paper (7) is treated chemically and dried to produce a colour print. In the hybrid system, images (FO) of optical origin and images (FE) of electronic origin are projected onto a single sheet of light-sensitive paper (7), and with a simple modification to the operation of the optical projection system (GO) consisting in the interposition of a mask (81 or 82) with opaque areas (81a, 81b or 82a, 82b) of given shape and dimensions, placed over the film (2) bearing the image (FO) or over the sheet of light-sensitive paper (7), it becomes possible to leave selected areas (71, 72) of the paper unexposed; these same areas will receive corresponding images (FE) reproduced with the electronic system (GE), thereby completing the composition of the hybrid image that appears ultimately in the photograph.

## Description

The present invention relates to a hybrid system for the production of photographic colour prints, whereby the complete image of a colour photograph is obtained as a composite print by projecting images both from photographic film and from digitally encoded sources onto a discrete strip of light-sensitive paper.

The art field of photography embraces the production of colour prints by projecting images from photographic film onto suitable light-sensitive paper, a process carried out automatically by purpose-built photographic printing machines of conventional embodiment.

The prior art also embraces integrated systems, known as "minilabs", composed of a printing unit, a print developing unit and in some cases a film developing unit, all fully automatic in operation, in which the images recorded on photographic film are projected by a suitable optical assembly onto corresponding discrete lengths of a strip of light-sensitive paper decoiled from a roll and positioned on a printing surface. After being exposed, the discrete strips of light-sensitive paper pass through a succession of chemical treatment baths in which the latent images are developed, then through a drying enclosure, whereupon the finished photographs are deposited in a collection chute.

Recent years have witnessed the development, alongside the conventional optical projection system outlined above, of various systems by which images are formed electronically; such images are digitally encoded and recorded on a suitable storage medium, then, suitably processed, will be reassembled and projected likewise onto a relative strip of light-sensitive paper by means of a system using one of sundry conventional devices, typically cathode ray tubes of whatever type, or Laser or Led or liquid crystal devices, in such a way as to generate corresponding colour prints.

It is acknowledged that the reproduction of images by optical projection results in a higher definition and therefore a superior level of quality than obtainable hitherto with electronic reproduction.

Machines have appeared latterly which combine both the familiar optical projection unit and the electronic image generating unit in a single apparatus, the two units operating in conjunction with a single unit that decoils and cuts the discrete strips of light-sensitive paper for the photographs. This combination type of machine thus permits of processing colour photographs in which the images can be produced using both the optical system and the electronic system. Furthermore, integration of the different image generating devices into a single machine is advantageous not only in terms of the dual processing capability, but also in that the machine itself is rendered compact, exhibiting notably manageable dimensions overall.

It is normally envisaged that the two systems in these combination machines will be utilized separately, to produce two corresponding types of print. By contrast, it would be especially useful and advantageous if, for certain particular uses, colour photographs could be printed with images of a hybrid character, that is to say generated by composite and sequential projection employing both systems (optical and electronic); this same object is duly realized in the system to which the present invention relates.

The invention will now be described in detail, by way of example, with the aid of the accompanying drawings, in which:
- fig 1 affords a schematic representation of optical and electronic image generating systems in a single photographic printing machine of the type suitable for implementing the present invention, and of the manner in which the relative images are projected onto a strip of light-sensitive paper;
- fig 2 shows an image recorded on photographic film;
- fig 3 illustrates a mask for positioning over the film shown in fig 2;
- fig 4 shows a mask for positioning over a sheet of light-sensitive paper;
- fig 5 shows the reproduction of an image as in fig 2 on a sheet of light-sensitive paper, obtainable by interposing the mask of fig 3 or fig 4;
- fig 6 shows the complete image obtained ultimately by the projection of an optical image as in fig 2 jointly with an electronic image.

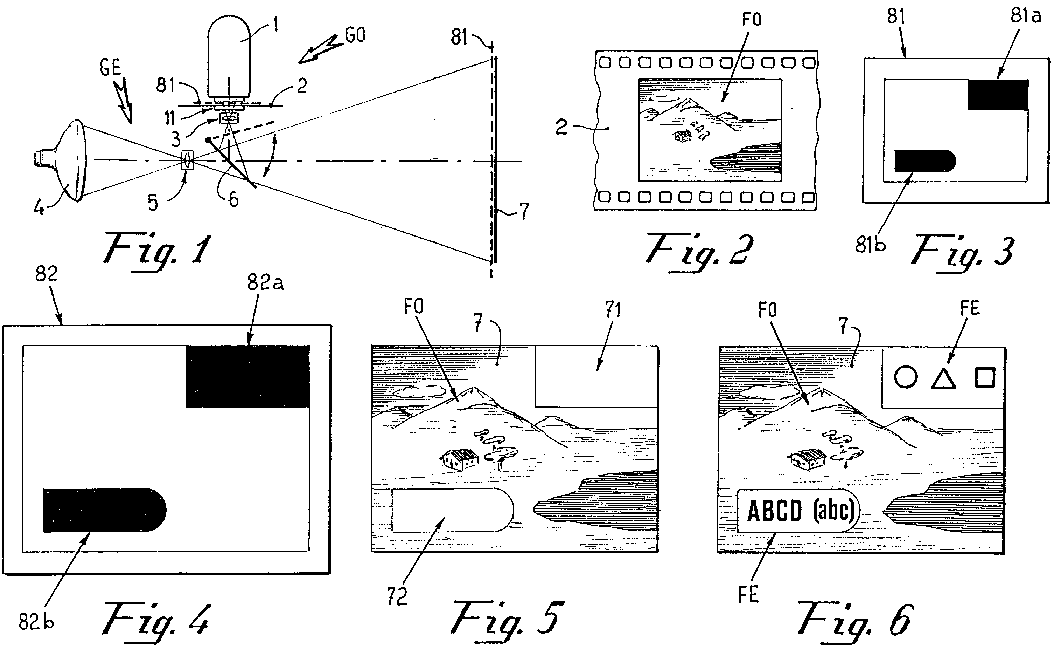

Referring initially to fig 1 of the drawings, GO and GE denote an optical projection assembly and an electronic image generating assembly, respectively, installed in a photographic printing machine.

The optical projection assembly GO is conventional in embodiment, comprising a light source 1, a support 11 in which to position a strip of photographic film 2, and a lens 3.

The electronic image generating assembly GE, likewise conventional, comprises a cathode ray tube 4 preferably of the type capable of producing colour images, and a lens 5.

In the solution illustrated and described by way of example, the optical projection assembly GO and the electronic image generating assembly GE are installed at right angles to one another with their projection axes occupying a common plane, and in conjunction with a mirror 6 positioned on the side of the lenses 3 and 5 farthest from the source; the mirror 5 is hinged along one edge and rotatable thus between a position angled at 45 in relation to the projection axis both of the optical projection assembly GO and of the electronic image generating assembly GE, as indicated by the bold line in fig 1, and a position outside the compass of the beam thrown by the lens 5 of the electronic image generating assembly GE, indicated by the phantom line. With the mirror 6 occupying the first position, the image projected by the optical assembly GO is reflected in such a way as to fall on a sheet of light-sensitive paper 7, whereas with the mirror rotated to the second position, only the image generated by the electronic assembly GE is projected onto the same light-sensitive paper 7, in this instance directly.

Naturally, a photographic printing machine of the type in question will be equipped with suitable systems and devices by means of which the sheet of light-sensitive paper 7 is advanced toward and positioned at a print station, directed thereafter through chemical treatment baths and a successive drying enclosure, and deposited finally in a collection tray or chute (all of which conventional in embodiment and neither described nor illustrated in consequence).

The hybrid system disclosed is implemented utilizing a combination machine of the type described above, which comprises both an optical projection assembly GO and an electronic image generating assembly GE.

Suitable software is used to pilot the operation of the two assemblies in succession, either the optical GO followed by the electronic GE, or viceversa, such that each produces a relative image on the selfsame sheet of light-sensitive paper 7. It will be possible in certain instances and with some types of colour to superimpose the two images, namely electronic FE and optical FO, the first image FE or FO being overlaid with a second image FO or FE of different though compatible colour. This first possible application would be singularly useful for the reproduction, in particular, of script or graphics generally.

To greater advantage yet, it will be possible to obtain a hybrid type of image, i.e. FO+FE, comprising portions reproduced by optical projection in conjunction with portions reproduced electronically.

A clean separation of the component portions will be obtained by positioning a suitable mask 81 or 82, in such a manner as to create one or more windows 71 or 72 of predetermined shape and dimensions on the sheet of light-sensitive paper 7, as illustrated in fig 5.

In effect, by positioning a mask 81 as in fig 3 over the photographic film 2 bearing an optical image FO (see figs 1 and 2), or a mask 82 as in fig 4 over the sheet of light-sensitive paper 7, it becomes possible, as indicated in fig 5, to cover one or more areas 71, 72 of the paper selectively and prevent their exposure during the optical projection, the areas in question having already been printed with respective images FE retrieved from a digitally encoded source.

Needless to say, the option also exists of projecting the optical image first, followed by the electronic, interposing the mask 81 or 82 in the same way.

Clearly, given the premiss already established, namely that the quality of an optically reproduced image is superior to that of an image produced from digitally encoded sources, a hybrid image FO+FE according to the invention will be of higher quality than a composite image printed from digitally encoded sources only.

The operations of fitting and replacing or modifying the masks 81 or 82 can be effected manually or, more advantageously, automated by the addition of such means and/or devices as may be appropriate.

The masks 81 and 82 can be embodied employing a variety of systems and materials, for example consisting in a thin sheet or film of transparent material exhibiting opaque areas 81a, 81b or 82a, 82b (see figs 3 and 4), formed typically by lithography or other similar means, of which the effect is to intercept the luminous flux and cause corresponding areas 71, 72 of the sheet of light-sensitive paper 7 to remain unexposed.

It will be observed that the maximum size of hybrid photographic print obtainable with the system according to the invention will correspond to the largest image that can be reproduced with either of the two systems installed; for example, if the combination machine is able to print up to 20 x 30 cm employing the electronic system and up to 30 x 45 cm using optical projection, then the latter measurement reflects the maximum print size obtainable.

The system disclosed affords considerable advantages over existing and conventional processes inasmuch as it allows hybrid photographic prints to be produced using a single processing unit, which in practice will be a machine already embraced by the prior art, exhibiting compact dimensions, simple to operate and therefore requiring no special skills on the part of staff, and moreover, requiring no special equipment or auxiliary devices; in effect, the most that may be required will be the masks, which are in any event simple to position and operate, allowing manual use without any difficulty whatever.

Nonetheless, the positioning of the masks 81 or 82 can also be facilitated by the addition of suitable devices such as will perform the function in fully automatic mode. Indeed, given that the two reproduction systems (optical and electronic) must operate in sequence and in conjunction with the same strip of light-sensitive paper, a dedicated software will be required in order to control and coordinate the operation of the system as a whole; moreover, the position of the mask 81 or 82 and the resulting impact on the composite image FO+FE might be monitored by means of a suitable video display unit showing both the optical image FO, viewed by a television camera strategically placed in relation to the film bearing the image FO for projection, and the image or images FE of digitally encoded origin. The entire process will also be supervised by a software program designed to pilot the operation of devices able to determine the exact mutual positions of the two different types of image FO or FE being reproduced.

Evidently, variations might be applied to the system according to the present invention without by any means abandoning the scope of the foregoing specification, neither straying from within the bounds of protection afforded by the claims appended.

## Claims

**1)** A hybrid colour photography printing system, essentially utilizing a photographic printing machine of the type comprising two image generating systems in a single unit, namely a conventional optical system (GO) by which an image (FO) recorded on photographic film (2) is projected onto a sheet of light-sensitive paper (7), and an electronic system (GE) by which digitally encoded images (FE) recorded on a suitable storage medium are retrieved and projected likewise onto a sheet of light-sensitive paper (7), also means by which a sheet of light-sensitive paper (7) bearing a printed image (FO, FE) generated by the optical and electronic systems is advanced to a group of chemical treatment baths in which the latent image is developed, thence through a drying chamber, and deposited finally as a finished photograph in a collection chute,
characterized
in that images of exclusively optical origin (FO) and of exclusively electronic origin (FE) are projected onto a single sheet of light-sensitive paper (7) in such a way as to obtain a composite image (FO+FE), created either as a simple superimposition of the two images (FO, FE), suitable especially when reproducing script and graphics generally, or with the aid of an interposed mask (81, 82) exhibiting one or more opaque areas (81a, 81b; 82a, 83b) of predetermined shape and dimensions, utilized preferably in conjunction with the optical projection system (GO), which is placed over the film (2) bearing the image (FO) for reproduction or over the impressionable surface of the sheet of light-sensitive paper (7) in such a way as to intercept the projected beam of light and thereby generate one or more corresponding unexposed areas (71, 72) on the sheet of light-sensitive paper (7), destined to receive one or more corresponding images (FE) reproduced with the electronic system, and thus obtain a photograph bearing a hybrid image (FO+FE) composed of portions generated with the optical reproduction system (GO) and portions generated with the electronic reproduction system (GE); and,
in that the optical and the electronic reproduction systems are controlled and monitored and coordinated in operation by means of dedicated software.

**2)** A system as in claim 1, wherein the mask (81 or 82) consists in a transparent film exhibiting opaque areas (81a, 81b; 82a, 83b) produced by conventional means and/or systems such as lithography or similar processes.

**3)** A system as in preceding claims, wherein the mask (81 or 82) can be interposed manually or using a device piloted to position different masks automatically.

**4)** A system as in preceding claims, wherein the image (FO) for optical reproduction, with respective masked areas if any, is viewed by a television camera placed strategically in relation to the film and displayed on a video monitor together with the image or images (FE) retrieved electronically from the digitally encoded source in such a way as to verify the positions of the different images one relative to another, and wherein the mutual positioning of the two types of image (FO and FE) thus displayed is processed and controlled by a dedicated software program serving also to pilot the operation of devices designed to correct any defects or lack of precision in such positioning.

**5)** A system as in preceding claims, wherein the maximum size of hybrid print obtainable is determined by the maximum size of image individually obtainable either with the optical reproduction system or with the electronic reproduction system.
